# EUROPÄISCHE PATENTANMELDUNG

(11) **EP 0 752 581 A2**
(43) Veröffentlichungstag der Anmeldung: **08.01.1997**
(21) Anmeldenummer: 96110657.2
(22) Anmeldetag: 02.07.1996
(51) Int. Cl.: G01L 23/22

(54) **Schaltungsanordnung zur Ionenstrommessung**

(30) Priorität: 05.07.1995 DE 19524540
(71) Anmelder: TEMIC TELEFUNKEN microelectronic GmbH, 74072 Heilbronn (DE); DAIMLER-BENZ AKTIENGESELLSCHAFT, 70567 Stuttgart (DE)
(72) Erfinder: Hohner, Peter, 70771 Echterdingen (DE); Schirmer, Jens, 74074 Heilbronn (DE)
(74) Vertreter: Maute, Hans-Jürgen, Dipl.-Ing.

(57) **Zusammenfassung**

Die Erfindung betrifft eine Transistorzündanlage, bei der im Primärkreis der Zündspule ein Wechselspannungssignal eingekoppelt wird, das nach erfolgter Zündung sekundärseitig keinen Zündfunken herbeiführt, jedoch zu einem Wechselspannungssignal führt, das in Abhängigkeit des Ionisationsgrades der Zündfunkenstrecke moduliert wird und somit ein Meßsignal des Ionenstromes darstellt. Erfindungsgemäß wird das primärseitige Wechselstromsignal an dem Verbindungspunkt zwischen dem Zündtransistor und der Primärwicklung der Zündspule eingekoppelt. Hierdurch werden bei sinusförmiger Anregung weniger Oberwellen und somit auch weniger Störimpulse erzeugt, so daß der Aufwand an Filtermaßnahmen zur Generierung des Ionenstromsignales geringer wird.

## Beschreibung

Die Erfindung betrifft eine Schaltungsanordnung zur Ionenstrommessung gemäß dem Oberbegriff des Patentanspruches 1

Eine solche Schaltungsanordnung ist aus der DE 33 27 766 A1 bekannt, die zur Klopferkennung an einer Brennkraftmaschine dient, bei der im Brennraum jedes Zylinders eine gleichzeitig als Ionenstromsonde dienende Zündkerze angeordnet ist. Um ein Meßsignal für den Ionenstrom zu erhalten, wird auf der Primärseite der Zündspule eine Wechselspannung erzeugt, die sekundärseitig zu einem Meßsignal des Ionenstromes führt, dem dessen Schwankungen aufmoduliert sind. Dieses amplitudenmodulierte sekundärseitige Wechselspannungssignal wird sekundärseitig ausgekoppelt und in einer Auswerteschaltung bearbeitet.

Diese bekannte Schaltungsanordnung umfaßt eine Transistorzündung, bei der das primärseitige Wechselspannungssignal nach erfolgter Zündung, also im Anschluß an das an die Steuerelektrode des Zündtransistors angelegte Zündauslösesignal ebenfalls dieser Steuerelektrode impulsförmig zugeführt wird. Der Nachteil dieser Art der Einspeisung des Wechselspannungssignales in den Primärkreis der Zündspule besteht darin, daß durch entstehende Oberwellen aufwendige Maßnahmen zur Ausfilterung des Ionenstromsignales erforderlich sind.

Der Erfindung liegt daher die Aufgabe zugrunde, eine Schaltungsanordnung der eingangs genannten Art anzugeben, die die genannten Nachteile der bekannten Schaltungsanordnung vermeidet.

Diese Aufgabe wird gemäß den kennzeichnenden Merkmalen des Patentanspruches 1 gelöst, wonach bei einer Transistorzündung das primärseitige Wechselspannungssignal an dem Verbindungspunkt zwischen dem Zündtransistor und dem Primärkreis, also der Primärwicklung der Zündspule in den Primärkreis eingespeist wird.

Bei einer vorteilhaften Ausführungsform der Erfindung besteht die Zündspule aus einer Primär- und Sekundärwicklung, wobei das als Meßsignal dienende sekundärseitige, modulierte Wechselspannungssignal mittels einer im Sekundärkreis der Zündspule angeordneten Meßanordnung abgegriffen wird.

Bei einer weiteren vorteilhaften Weiterbildung der Erfindung ist die Zündspule als Spartransformator ausgebildet, so daß das Meßsignal direkt auf der Primärseite der Zündspule abgegriffen werden kann, da dort keine Hochspannung anliegt. Der Vorteil liegt hierbei darin, daß zur Auskopplung keine zusätzlichen sekundärseitigen Bauelemente erforderlich sind.

Schließlich kann die Frequenz des primärseitigen Wechselspannungssignales so gewählt werden, daß die Differenz zwischen den Frequenzen dieses primären Wechselspannungssignales und des erwarteten Ionenstromsignales möglichst groß ist, so daß eine einfache Generierung des Ionenstromsignales möglich ist.

Im Folgenden soll die Erfindung anhand von Ausführungsbeispielen im Zusammenhang mit den Figuren dargestellt und erläutert werden. Es zeigen:
Figur 1 ein Blockschaltbild einer erfindungsgemäßen Schaltungsanordnung,
Figur 2 ein Blockschaltbild einer weiteren Ausführungsform der Erfindung mit einem Spartransformator als Zündspule,
Figur 3 eine schematische Darstellung einer Zündspule mit den zur Erzeugung eines Ionenstrommeßsignales erforderlichen Wechselspannungssignalen und
Figuren 4a und 4b Zeit-Spannungs-Diagramme zur Erläuterung der Erzeugung eines Ionenstrommeßsignales.

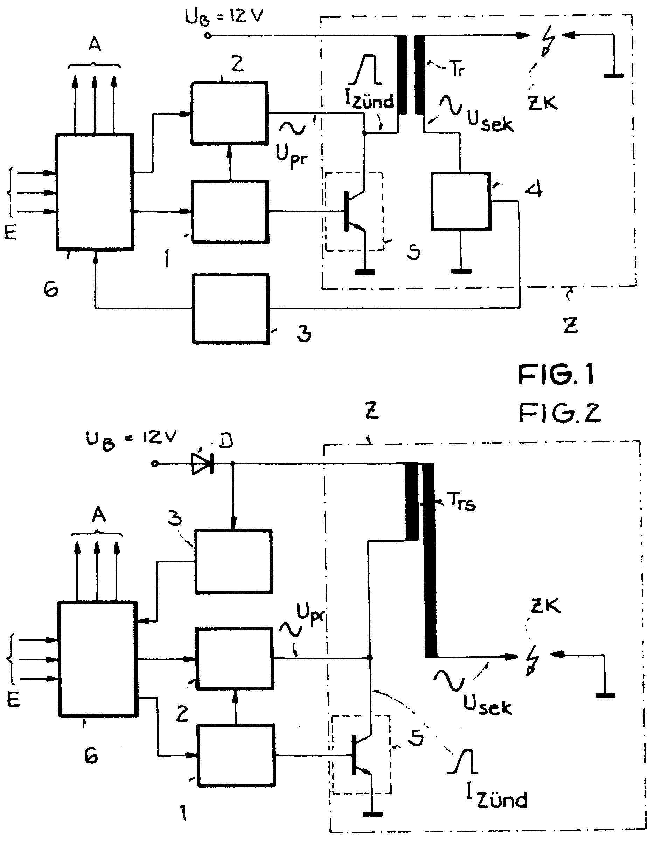

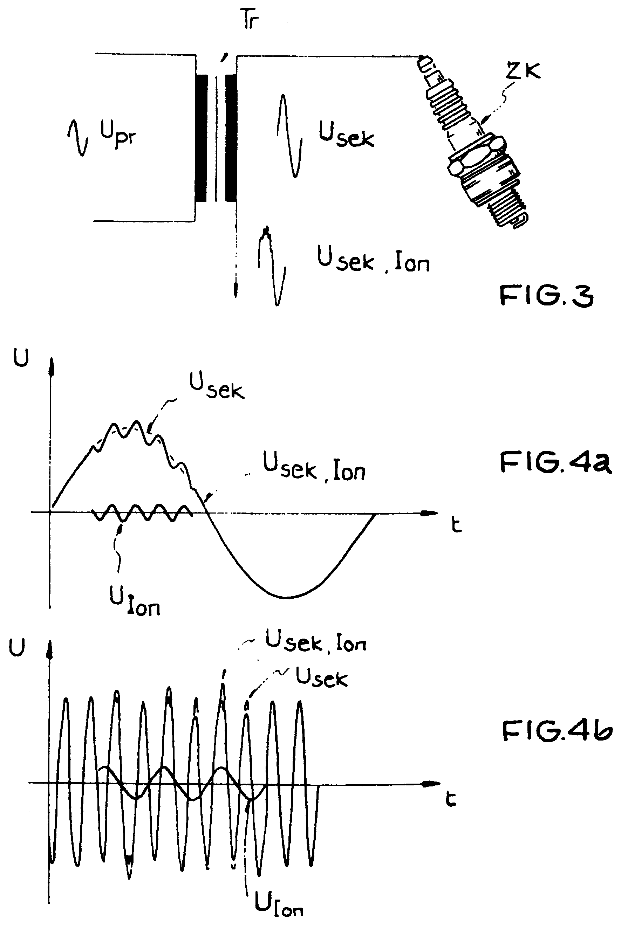

Obwohl die in den Figuren 1 und 2 dargestellten Transistorzündanlagen für Mehrzylinder-Brennkraftmaschinen geeignet sind, ist der Einfachheit halber jeweils nur eine Zündendstufe Z mit einer Zündkerze Zk gezeichnet.

Die Zündendstufe Z gemäß Figur 1 umfaßt eine Zündspule Tr mit einer Primär- und einer Sekundärwicklung, wobei an die Sekundärwicklung die schon genannte Zündkerze Zk angeschlossen ist. Die Primärwicklung ist mit ihrem einen Anschluß an eine von einer Bordbatterie gelieferten Betriebsspannung U_{B} von 12 V angeschlossen und mit ihrem anderen Anschluß mit einem Zündtransistor 5 verbunden. Dieser Zündtransistor 5 wird über dessen Steuerelektrode von einer Regelschaltung 1 angesteuert, in dem über die Verbindungsleitung Zündauslöseimpulse diesem Zündtransistor 5 zugeführt werden.

An dem Verbindungspunkt des Zündtransistors 5 mit der Primärwicklung der Zündspule Tr ist ein Wechselspannungsgenerator 2 angeschlossen, mit dem ein Wechselspannungssignal Uₚᵣ in den Primärkreis eingekoppelt wird. Die Amplitude dieses primärseitigen Wechselspannungssignales Uₚᵣ ist derart gewählt, daß das hierdurch sekundärseitig erzeugte Wechselspannungssignal Uₛₑₖ an der Zündkerze Zk keine Zündung auslöst. Dieses sekundärseitige Wechselspannungssignal Uₛₑₖ wird jedoch in Abhängigkeit des Ionisationsgrades der Funkenstrecke amplitudenmoduliert und stellt somit das Meßsignal U_{sek,Ion} für den Ionenstrom dar, wie dies in Figur 3 schematisch gezeigt ist.

Diese Spannungsgrößen Uₛₑₖ, U_{sek,Ion} und das eigentliche Ionenstrommeßsignal U_{Ion} sind zur Verdeutlichung in den Zeit-Spannungs-Diagrammen nach den Figuren 4a und 4b dargestellt, wobei Uᵢₒₙ der Einfachheit halber Sinusförmig gezeichnet ist.

Die Frequenz f_{Upr} des primärseitig erzeugten Wechselspannungssignals Uₚᵣ sollte möglichst weit von der Frequenz f_{UIon} des Ionenstromsignals U_{Ion} entfernt liegen, da dies die Auskopplung des Meßsignales erleichtert. So erfordert beispielsweise ein hochfrequentes Ionenstromsignal U_{Ion} eine niedrige Frequenz f_{Upr} des Wechselspannungssignales Uₚᵣ, so daß sich dieses Ionenstromsignal U_{Ion} auf die erste Halbwelle des Wechselspannungssignales Uₛₑₖ aufmoduliert, womit sich in dem entsprechenden Meßintervall eine quasistationäre Gleichspannung einstellt, wie dies in Figur 4a dargestellt ist. Den umgekehrten Fall zeigt Figur 4b, wo bei niedrigen Frequenzen des Ionenstromsignales U_{Ion} die Frequenz des Wechselspannungssignales Uₚᵣ sehr viel höher liegt, mit der Folge einer leichteren Auskopplung des Ionenstromsignales U_{Ion} über einen Tiefpaß. Das jeweils ausgekoppelte Ionenstromsignal U_{Ion} ist in den Figuren 4a und 4b ebenfalls dargestellt.

Die Auskopplung dieses sekundärseitigen Meßsignales U_{sek,Ion} erfolgt mit Hilfe einer Meßanordnung 4 am stromschwachen Ende der Sekundärwicklung der Zündspule Tr. Diese Meßanordnung 4 umfaßt beispielsweise einen hochohmigen Widerstand, eine Koppelspule, einen Kondensator, ein Halbleiterbauelement oder eine Kombination dieser Elemente.

Das ausgekoppelte Meßsignal U_{sek,Ion} wird einer Auswerteschaltung 3 zugeführt, die eine Signalaufbereitung, beispielsweise mit einem Demodulator und einem oder mehreren Filtern, um hieraus das eigentliche Nutzsignal, also das Ionenstromsignal U_{Ion} zu generieren, das dann einem Steuergerät zugeführt wird.

Dieses Steuergerät 6 übernimmt die Funktion eines Motormanagements und steuert seinerseits die Regelschaltung 1 an, um über eine entsprechende Verbindungsleitung eine korrekte Zündverteilung sicherzustellen. Hierzu werden dieser Steuereinheit 6 über einen Eingang E Motorparameter, wie Last, Drehzahl und Temperatur zugeführt. Entsprechende Aktuatoren werden über Ausgänge A gesteuert.

Die Steuerung des Wechselspannungsgenerators 2 erfolgt ebenfalls über das Steuergerät 6 in der Weise, daß nach der Abgabe eines Zündauslöseimpulses das das Meßsignal U_{sek,Ion} auslösende Wechselspannungssignal Uₚᵣ in den Primärkreis eingespeist wird.

Durch diese Art der Einspeisung des Wechselspannungssignales Uₚᵣ werden keine Oberwellen in dem Primärkreis erzeugt, so daß auch der Filteraufwand in der Auswerteschaltung 3 zur Generierung des eigentlichen Ionenstromsignales U_{Ion} minimiert wird. Desweiteren werden auch weniger Störimpulse erzeugt, was sich insgesamt vorteilhaft auf die Störeigenschaften der Bordelektronik auswirkt.

Die Transistorzündung nach Figur 2 unterscheidet von derjenigen nach Figur 1 lediglich dadurch, daß als Zündspule ein Spartransformator Trₛ verwendet wird.

Die Funktion dieser Schaltung als Zündanordnung entspricht derjenigen nach Figur 1. Auch das Wechselspannungssignal Uₚᵣ wird in entsprechender Weise in den Primärkreis eingespeist, so daß das hierdurch erzeugte sekundärseitige, als Meßsignal für den Ionenstrom dienende Wechselspannungssignal Uₛₑₖ zu keiner Zündung an der Zündkerze Zk führt.

Die Auskopplung des Meßsignales U_{sek,Ion} erfolgt über die Primärseite der Zündspule mit einer Diode D, die ihrerseits mit der von einer Bordbatterie gelieferten Betriebsspannung U_{B} verbunden ist.

Die direkte Verbindung der Primärseite dieser Zündspule Trₛ mit der Auswerteschaltung 3 ist deshalb möglich, da an diesem Ende der Spule keine Hochspannung anliegt. Durch diese Schaltungsanordnung sind sekundärseitig keine Bauelemente erforderlich.

Die in den Figuren 1 und 2 gezeigte Anordnung zur Einspeisung eines Wechselspannungssignales Uₚᵣ, das sekundärseitig zu einem Meßsignal U_{sek,Ion} für den Ionenstrom führt, kann nicht nur für Transistorzündungen, sondern auch für Hochspannungs-Kondensator-Zündungen verwendet werden. Hochspannungskondensator-Zündanlagen sind beispielsweise aus der DE-OS 24 55 536 bekannt.

Aus den der Steuereinheit 6 zugeführten Nutzsignalen können Informationen über den Verbrennungsvorgang und das Motorverhalten abgeleitet werden, um hieraus Regelgrößen zur Steuerung der Zündanlage abzuleiten und der Regelschaltung 1 zuzuführen.

So kann beispielsweise eine Klopfsignalauswertung durchgeführt werden, die keinen störgeräuschanfälligen Körperschallsensor erfordert. Weiterhin kann mit der Information über den Verbrennungsvorgang eine Zündenergiesteuerung durchgeführt werden, insbesondere der Zylinderdruck bestimmt werden, der mit in die Lambda-Regelung und Einspritzsteuerung eingeht. Weiterhin kann aus dem Nutzsignal eine Zylinder-1-Erkennung abgeleitet werden. Ferner lassen sich auch Zündaussetzer erkennen um damit Katalysatorschäden zu vermeiden. Schließlich kann eine Lasterkennung ebenfalls aus dem Nutzsignal abgeleitet werden, um hieraus eine zylinderselektive Laufruhenregelung und Zylinderfüllungsgleichverteilung durchzuführen.

## Patentansprüche

1. Schaltungsanordnung zur Ionenstrommeßung im Verbrennungsraum einer Brennkraftmaschine, bestehend aus
a) einer Zündspule (Tᵣ, Trₛ) mit Primär- und Sekundärkreis,
b) ein mit dem Primärkreis verbundener Zündtransistor (5),
c) einer im Sekundärkreis angeordneten Zündkerze (Zk), die gleichzeitig als Ionenstromsonde dient,
d) bei der nach erfolgter Zündung im Verbrennungsraum im Sekundärkreis ein Wechselspannungssignal (Uₛₑₖ) erzeugt wird, dessen Amplitudenwert kleiner als die zur Zündung erforderlich Zündspannung ist und in Abhängigkeit des Ionisationsgrades der Zündfunkenstrecke als Meßsignal des Ionenstromes ein moduliertes Wechselspannungssignal (U_{sek,Ion}) im Sekundärkreis bewirkt,
gekennzeichnet durch folgende Merkmale:
e) es wird ein das sekundäre Wechselspannungssignal (Uₛₑₖ) erzeugende Wechselspannungssignal (Uₚᵣ) an dem Verbindungspunkt des Zündtransistor (5) mit dem Primärkreis eingespeist.

2. Schaltungsanordnung nach Anspruch 1, dadurch gekennzeichnet, daß die Zündspule (Tᵣ) mit einer Primärwicklung und einer Sekundärwicklung aufgebaut ist und daß das Meßsignal (U_{sek,Ion}) des Ionenstromes mittels einer im Sekundärkreis der Zündspule (Tᵣ) angeordneten Meßanordnung (4) abgegriffen wird.

3. Schaltungsanordnung nach Anspruch 1, dadurch gekennzeichnet, daß die Zündspule (Trs) als Spartransformator ausgebildet ist und daR das Meßsignal (U_{sek,Ion}) des Ionenstromes an der Primärseite der Zündspule (Trₛ) abgegriffen wird.

4. Schaltungsanordnung nach einem der vorangehenden Ansprüche, dadurch gekennzeichnet, daß die Frequenz des primären Wechselspannungssignales (Uₚᵣ) so eingestellt wird, daß die Differenz zwischen den Frequenzen des primären Wechselspannungssignales (Uₚᵣ) und des erwarteten Ionenstromsignales (U_{Ion}) möglichst groß ist.
